# EUROPEAN PATENT SPECIFICATION

(11) **EP 2 403 179 B1**
(45) Date of publication and mention of the grant of the patent: **07.05.2014**
(21) Application number: 11183407.3
(22) Date of filing: 25.01.2008
(51) Int. Cl.: H04L 5/00, H04W 72/04

(54) **Method and system for assigning carriers to a mobile station**
Verfahren und System für die Zuweisung von Trägern an eine Mobilstation
Procédé et système d'affectation de porteuses à une station mobile

(30) Priority: 02.02.2007 CN 200710006881
(43) Date of publication of application: 04.01.2012
(62) Divisional of application: 08706558.7
(73) Proprietor: Huawei Technologies Co., Ltd., Longgang District, Shenzhen Guangdong 518129 (CN)
(72) Inventor: Geng, Fenghua, 518129 Shenzhen (CN)
(74) Representative: Thun, Clemens

(56) References cited:
- SIEMENS NETWORKS ET AL: "Introduction of Downlink Dual Carrier - Assignment Messages", 3GPP DRAFT; GP-062480_44060DCDL_R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061117, 17 November 2006 (2006-11-17), XP050017440,
- SIEMENS NETWORKS: "Introduction of Downlink Dual Carrier messages", 3GPP DRAFT; GP-062225_DCDL44018-760, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061108, 8 November 2006 (2006-11-08), XP050017207,
- ERICSSON: "Dual-carrier in Downlink Principles 1 General", 3GPP DRAFT; GP-060752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. San Jose del Cabo, Mexico; 20060419, 19 April 2006 (2006-04-19), XP050015843,
- SIEMENS: "Introduction of Downlink Dual Carrier - Procedures", 3GPP DRAFT; GP-062229_CR44.060-INTRODLDC_PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061108, 8 November 2006 (2006-11-08), XP050017211,

## Description

### Field of the Invention

The present invention relates to the communication technology field, and in particular, to a method, a mobile station and a base station for assigning carriers to an MS (Mobile Station).

### Background of the Invention

With the development of science and technologies, people tend to have higher and higher requirements on mobile communication services and their quality. Therefore, the requirement for smooth evolution to the third generation (3G) mobile communication technology is put forward. The main technologies for evolution to the 3G are General Packet Radio Service (GPRS), Enhanced Data Rate for GSM Evolution (EDGE) and High Speed Circuit Switched Data (HSCSD), and the research focuses on improving the transmission rate and reducing transmission delay by using limited spectrum resources.

GPRS is a packet data switching technology introduced in the Global System for Mobile Communications (GSM). It is superimposed in GSM and extends the service life of GSM. GPRS is based on packet forwarding, and channel statistical multiplexing, which raises the rate of data services in prior GSM from 9.6 kbps to 100 kbp/s. Like GSM, however, GPRS adopts Gaussian Minimum Shift Keying (GMSK), so the transmission rate cannot reach 2 Mbit/s required by 3G services. To fully meet the bandwidth requirements of wireless multimedia applications in the future, EDGE provides a transitional solution for evolving from GPRS to 3G EDGE is a mobile communication technology with an enhanced data rate based on GSM/GPRS and is usually called a 2.75G technology. The technology mainly provides wideband services and can enable the networks using 800 MHz, 900 MHz, 1800 MHz and 1900 MHz to provide some functions of a 3G network.

At present, the theoretical peak data rate of Enhanced General Packet Radio Service (EGPRS) is 473.6 kbps. In an actual network, the rate can reach 100-200 kbps by using four timeslots. When multiple carriers are used, the peak and the average rates may increase in a similar proportion to the number of carriers, for example, when two carriers are used, the theoretical peak rate is close to 1 Mbit/s.

Among assignment messages in the method for assigning resources in the prior art, the structure of a temporary block flow (TBF) in carrier assignment includes the information of timeslot bitmaps assigned by the TBF, as described below:

```
  < Dual Carrier Multiple Downlink TBF Assignment struct > ::=
  < TIMESLOT_ALLOCATION_C1 : bit (8) >
  { 0 | 1 < TIMESLOT_ALLOCATION_C2 : bit (8) > }
  { 1 < Downlink TBF assignment: < Dual Carrier Downlink TBF assignment struct > > }
  **0;
```

The first timeslot bitmap indicates assigned resource on the first carrier, and the second timeslot bitmap indicates assigned resource on the second carrier. The first timeslot bitmap is always valid, and the second timeslot bitmap is optional. If the flag is set to 1, the second timeslot bitmap is valid; if the flag is set to 0, the second timeslot bitmap is invalid. When the second timeslot bitmap is valid, the timeslot on the second carrier is assigned to the TBF; when the second timeslot bitmap is invalid, the timeslot (the same as the one assigned on the first carrier) used by the second carrier is assigned to the TBF. Therefore, during research, the inventor finds at least the following problem in the prior art: one carrier and two carriers may not be assigned to each TBF through an assignment message. For example, in the case that carriers need be assigned to three TBFs, in which the first TBF need be assigned two carriers, the second TBF need be assigned the carrier of first TBF, and the third TBF need be assigned the carrier of second TBF, the assignment cannot be realized in the prior art.

In the document SIEMENS NETWORK ET AL: "Introduction of Downlink Dual Carrier-Assignment Messages",3GPP DRAFT;GP062480 44060DCDL_R2,3RD GENERATION PARTNERSHIP PROJECT (3GPP), MOBILE COPTETENCE CENTRE; 650, ROUTE DES LUCIOLES; F-06921 SOPHIA-ANTIPOLS CEDEX;FRANCE,VOL.TSG GERAN,no.Sophia; 20061117,17 November2006 (2006-11-17), XP050017440, *Sections 11.2.7,11.2.7.a,11.2.29a*, to enable the ability to assign resources for TBFs on two separte carriers as part of the dual carrier in th downlink feature , some messages/IEs have been modified to enable resources to be specified on two carriers, and a new IE has been introduced called the Dual carrier Frequency Parameters IE.

In the document SIEMENS NETWORK: "Introduction of Downlink Dual Carrier Messages",3GPP DRAFT;GP062225_DCDL44018-760,,3RD GENERATION PARTNERSHIP PROJECT (3GPP), MOBILE COPTETENCE CENTRE; 650, ROUTE DES LUCIOLES; F-06921 SOPHIA-ANTIPOLS CEDEX;FRANCE,VOL.TSG GERAN,no.Sophia; 20061108,8 November 2006 (2006-11-08), XP050017207, *Section10.5.2.25e*, in order to allow network to make downlin dual carrier assignments, new IEs are added to DTM Asignment Command, Packet Assignment messages.

In the document ERICSSON: "Dual-carrier in Downlink Principles 1 General", 3GPP DRAFT;GP060752_DCDL44018-760,,3R GENERATION PARTNERSHIP PROJECT (3GPP), MOBILE COPTETENCE CENTRE; 650, ROUTE DES LUCIOLES; F-06921 SOPHIA-ANTIPOLS CEDEX;FR.ANCE,VOL.TSG GERAN,no.San Jose del Cabo, Mexico; 20060419,19 April 2006 (2006-4-19), XP05001843, *Sections 4 and 6*, the "Dual-carrier in Downlink" feature is developed with a "basic" approch onto which optimization of the radio resource utilization are added as optional functionality, wherein the "basic" functionaltity would be allow the network to assign timeslots on dual carriers according to existing multislots class schemes, and it would be allowed for the network to assign different number of timeslots on different frequencies.

In the document SIEMENS: "Introduction of Downlink Dual Carrier-Procedures",3GPP DRAFT;GP062229_CR44.060-INTRODLDC_PROCEDURES, 3RD GENERATION PARTNERSHIP PROJECT (3GPP), MOBILE COPTETENCE CENTRE; 650, ROUTE DES LUCIOLES; F-06921 SOPHIA-ANTIPOLS CEDEX;FRANCE,VOL.TSG GERAN,no.Sophia; 20061108,8 November 2006 (2006-11-08), XP050017211, *SectionS 5.2.1, 5.5.1.7, 5.9 AND 7.2.1.1 first paragrph*, to enable the ability to assign resources for TBFs on two separte carriers as part of the dual carrier in th downlink feature is introduced, some chages have been made,e.g., definition of the Downlink Dual Carrier feature.

### Summary of the Invention

Embodiments of the present invention provide a method and system for assigning carriers to an MS, so that one carrier and/or multiple carriers can be assigned to one or more than one TBF between the MS and the BS through an assignment message.

The objective of the present invention is realized through the following technical scheme.

A mobile station provided in an embodiment of the present invention includes:
a receiving unit, configured to receive an assignment message and downlink data sent from a base station, wherein the assignment message is for assigning part or all of two carriers to at least one Temporary Block Flow, TBF, and there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF;
a message resolving unit, configured to resolve the assignment message to obtain one carrier or two carriers assigned to the each of the at least one TBF; and
a sending unit, configured to send data to the base station on the one carrier or two carriers assigned to the each of the at least one TBF.

A base station provided in an embodiment of the present invention includes:
a receiving unit, configured to receive data transmitted between the base station and a mobile station;
a resource management unit, configured to assign one carrier or two carriers to the each of at least one TBF;
a message constructing unit, configured to construct an assignment message indicating carrier assignment of each of the at least one Temporary Block Flow, TBF, according to the one carrier or two carriers assigned to the each of the at least one TBF, wherein there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF; and
a sending unit, configured to send the assignment message and other downlink data to the mobile station.

A method for assigning carriers to a mobile station provided in an embodiment of the present invention includes:
receiving, by the mobile station, an assignment message and downlink data sent from a base station, wherein the assignment message is for assigning part or all of two carriers to at least one Temporary Block Flow, TBF, and there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF;
resolving, by the mobile station, the assignment message to obtain one carrier or two carriers assigned to the each of the at least one TBF; and
sending, by the mobile station, data to the base station on the one carrier or two carriers assigned to the each of the at least one TBF.

With the method, base station and mobile station for assigning carriers to an MS provided in an embodiment of the present invention, an assignment message can be used to assign one carrier and/or multiple carriers to one or more than one TBF between the MS and the BS, which increases the carrier assignment efficiency and further improves the peak rate and the average rate of the system.

### Brief Description of the Drawings

Figure 1 shows the structure of the system for assigning carriers to an MS in an embodiment of the present invention;
Figure 2 shows the flowchart of the method for assigning carriers to an MS in an embodiment of the present invention; and
Figure 3 shows the flowchart of the method for assigning carriers to an MS in another embodiment of the present invention.

### Detailed Description of the Invention

The embodiments of the present invention provide a method and system for assigning carriers to an MS. The invention is hereinafter described in detail with reference to the embodiments and accompanying drawings.

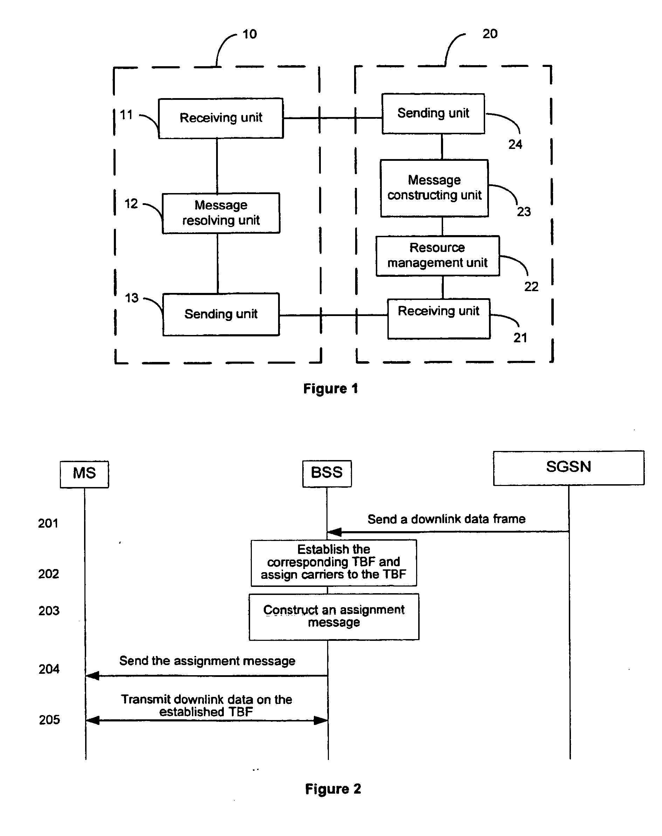

Figure 1 shows the structure of the system for assigning carriers to an MS in an embodiment of the present invention. The system for assigning carriers to an MS includes an MS 10 and a BS 20. The MS 10 includes a receiving unit 11, a message resolving unit 12 and a sending unit 13, and the BS 20 includes a receiving unit 21, a resource management unit 22, a message constructing unit 23 and a sending unit 24.

The receiving unit 11 of the MS 10 is configured to receive an assignment message from the BS and downlink data of the BS; the message resolving unit 12 of the MS 10 is configured to resolve the assignment message to obtain the carriers assigned to each TBF; the sending unit 13 of the MS 10 is configured to send data to the BS 20 on the carriers assigned to each TBF.

The receiving unit 21 of the BS 20 is configured to receive the data transmitted between the BS 20 and the MS 10; the resource management unit 22 of the BS 20 is configured to assign one carrier and/or two carriers to each TBF according to the TBF and the requirement on the transmission rate; the message constructing unit 23 of the BS 20 is configured to construct an assignment message indicating carrier assignment of each TBF according to the carriers assigned to the each TBF; the sending unit 24 of the BS 20 is configured to send the assignment message and other downlink data to the MS 10.

The system for assigning carriers to an MS provided in an embodiment of the present invention effectively increases the carrier assignment efficiency and further improves the peak rate and the average rate of the system.

Figure 2 shows the flowchart of the method for assigning carriers to an MS in an embodiment of the present invention, in which carriers are assigned to TBFs during transmission of downlink data. The flow includes:
Step 201: The serving GPRS support node (SGSN) sends a downlink data frame containing a packet flow identifier (PFI) to the base station subsystem (BSS).

The PFI indicates the packet flow context (PFC), which is the description of the QoS parameter and provided by the SGSN to the BSS and users. The QoS parameter includes the requirement on the data transmission rate.

Step 202: Upon receiving the downlink data frame, the BSS establishes one or more than one TBF corresponding to the downlink data frame and assigns one carrier and/or two carriers to each TBF.

Step 203: The BSS constructs an assignment message indicating carrier assignment of each TBF based on the carriers assigned to the each TBF. The message includes the information of the TBF(s) that is assigned one carrier and/or the information of the TBF(s) that is assigned two carriers.

The downlink assignment message may be constructed in the following two modes:

The format of a downlink assignment message constructed in the first mode includes information of two assigned carriers, the structure of the downlink TBF that is assigned the two carriers, the structure of the downlink TBF that is assigned the first carrier and the structure of the downlink TBF that is assigned the second carrier. Based on the carriers assigned to the TBFs, the information of the TBFs is filled in the structure of the downlink TBF that is assigned the two carriers, the structure of the downlink TBF that is assigned the first carrier, and the structure of the downlink TBF that is assigned the second carrier. If the information of a TBF is filled in the structure of the downlink TBF that is assigned two carriers, the two carriers are assigned to the TBF; if the information of a TBF is filled in the structure of the downlink TBF that is assigned the first carrier, the first carrier is assigned to the TBF; if the information of a TBF is filled in the structure of the downlink TBF that is assigned the second carrier, the second carrier is assigned to the TBF. For example, if a BS assigns the first carrier to the first TBF and the second carrier to the second TBF, the information of the first TBF is filled in the structure of the downlink TBF that is assigned the first carrier and the information of the second TBF is filled in the structure of the downlink TBF that is assigned the second carrier. Therefore, the assignment message includes the information of the TBF that is assigned the first carrier and the information of the TBF that is assigned the second carrier. Another example is: if a BS assigns the first or second carrier to the first TBF, and the first and second carriers to the second TBF, the information of the first TBF is filled in the structure of the downlink TBF that is assigned the first carrier or the structure of the downlink TBF that is assigned the second carrier, and the information of the second TBF is filled in the structure of the downlink TBF that is assigned the two carriers. Therefore, the assignment message includes the information of the TBF that is assigned one carrier and the information of the TBF that is assigned two carriers.

The following is an example of some codes included in the first type of downlink assignment message:

```
  < Multiple TBF Downlink Assignment message content > ::=
  {0 | { 1 < Dual Carrier Multiple Downlink TBF Assignment : < Dual Carrier Multiple
  Downlink TBF Assignment struct > > } ** 0 }
  { 0 | { 1 < Multiple Downlink TBF Assignment C1 : < Multiple Downlink TBF
  Assignment struct > > } ** 0 }
  { 0 | { 1 < Multiple Downlink TBF Assignment C2: < Multiple Downlink TBF
  Assignment struct > > } ** 0 }
```

The preceding assignment message indicates there is a TBF that is assigned two carriers, a TBF that is assigned the first carrier and a TBF that is assigned the second carrier.

The format of a downlink assignment message constructed in the second mode includes information of two assigned carriers, the structure of the downlink TBF that is assigned the two carriers and other information. The structure of the downlink TBF that is assigned two carriers includes the first timeslot allocation bitmap and the second timeslot allocation bitmap. Based on the carriers assigned to the TBF, the first timeslot allocation bitmap and the second timeslot allocation bitmap are set to valid ones and the information of the TBF is filled in the structure of the TBF that is assigned the two carriers. If the first timeslot allocation bitmap and the second timeslot allocation bitmap are valid, two carriers are assigned to the TBF; if the first timeslot allocation bitmap is valid and the second timeslot bitmap is invalid, the carrier corresponding to the first timeslot allocation bitmap is assigned to the TBF; if the first timeslot allocation bitmap is invalid and the second timeslot bitmap is valid, the carrier corresponding to the second timeslot allocation bitmap is assigned to the TBF.

The following is an example of some codes included in the second type of downlink assignment message:

```
  < Dual Carrier Multiple Downlink TBF Assignment struct > ::=
      {1
          { 0 | 1 < TIMESLOT_ALLOCATION_C1 : bit (8) > }
          { 0 | 1 < TIMESLOT_ALLOCATION_C2 : bit (8) > }
          {1 < Downlink TBF assignment : < Dual Carrier Downlink TBF assignment
          struct > > } ** 0
  } ** 0
```

If there are other TBFs before the TBF corresponding to the downlink data frame is established, the carrier configuration of the original TBF needs be modified. For example, before the TBF corresponding to the downlink data frame is established, if data is transmitted between the BSS and the MS via TBF1 and Carrier-A is assigned to TBF1 and Carrier-B and Carrier-C are assigned to the new TBF2, the Carrier-A assigned to TBF1 need be changed into Carrier-B or Carrier-C because only two carriers are allowed between the MS and the BSS. Therefore, in the assignment message, Carrier-B and Carrier-C need be assigned to TBF2 and Carrier-B or Carrier-C need be assigned to TBF1.

Step 204: The BSS sends the downlink assignment message to the MS.

Step 205: Upon receiving the downlink assignment message, the MS acquires the carriers assigned to TBFs and receives the downlink data from the BSS on the corresponding TBFs.

The method for assigning carriers to an MS provided in a embodiment of the present invention can increase the carrier assignment efficiency and further improve the peak rate and the average rate of the system.

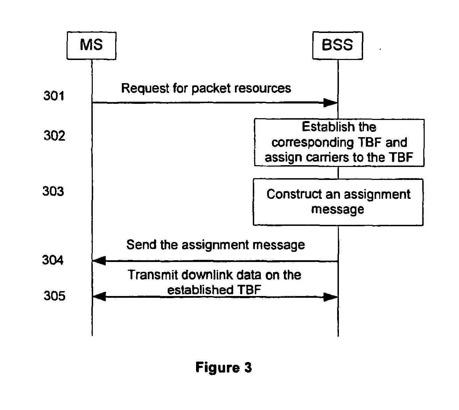

Figure 3 shows the flowchart of the method for assigning carriers to an MS in another embodiment of the present invention in which carriers are assigned to TBFs during transmission of uplink data. The flow includes the following steps:
Step 301: The MS sends a request for packet resources containing PFI to the BSS.
Step 302: Upon receiving the request, the BSS establishes one or more than one TBF corresponding to the packet resource request and assigns one carrier and/or two carriers to the TBF(s).
Step 303: The BSS constructs a message indicating carrier assignment based on the carriers assigned to the TBF(s). The message includes the information of the TBF(s) that is assigned one carrier and the information of the TBF(s) that is assigned two carriers.

An assignment message may be constructed in the following two modes:

The format of an uplink assignment message constructed in the first mode includes information of two assigned carriers, the structure of one or more than one uplink TBF that is assigned the two carriers, the structure of one or more than one uplink TBF that is assigned the first carrier and the structure of one or more than one uplink TBF that is assigned the second carrier. Based on the carriers assigned to TBF(s), the information of the TBF(s) is filled in the structure of the uplink TBF(s) that is assigned the two carriers, the structure of the uplink TBF that is assigned the first carrier, and the structure of the uplink TBF that is assigned the second carrier. If the information of a TBF is filled in the structure of the uplink TBF that is assigned two carriers, the two carriers are assigned to the TBF; if the information of a TBF is filled in the structure of the uplink TBF that is assigned the first carrier, the first carrier is assigned to the TBF; if the information of a TBF is filled in the structure of the uplink TBF that is assigned the second carrier, the second carrier is assigned to the TBF. For example, a BS assigns the first carrier to the first TBF and the second carrier to the second TBF, the information of the first TBF is filled in the structure of the uplink TBF that is assigned the first carrier and the information of the second TBF is filled in the structure of the uplink TBF that is assigned the second carrier. Another example is: if a BS assigns the first carrier and the second carrier to a TBF, the information of the TBF is filled in the structure of the uplink TBF that is assigned the two carriers.

The following is an example of some codes included in the first type of uplink assignment message:

```
  < Multiple TBF Uplink Assignment message content > ::=
  { 0 | { 1 < Dual Carrier Multiple Uplink TBF Assignment : < Dual Carrier Multiple
  Uplink TBF Assignment struct > > } ** 0 }
  { 0 | { 1 < Multiple Uplink TBF Assignment C1 : < Multiple Uplink TBF Assignment
  struct > > } ** 0 }
  { 0 | { 1 < Multiple Uplink TBF Assignment C2: < Multiple Uplink TBF Assignment
  struct > > } ** 0 }
```

The preceding assignment message may indicate that two carriers are assigned to one or more than one TBF, the first carrier is assigned to another TBF or more TBFs and the second carrier is assigned to one or more than one TBF.

The format of an uplink assignment message constructed in the second mode includes information of two assigned carriers, the structure of one or more than one uplink TBF that is assigned the two carriers and other information. The structure of one or more than one uplink TBF that is assigned the two carriers includes the first and the second timeslot allocation bitmaps, both of which are optional. If the first timeslot allocation bitmap and the second timeslot allocation bitmap are valid, two carriers are assigned to the TBF; if the first timeslot allocation bitmap is valid and the second timeslot bitmap is invalid, the carrier corresponding to the first timeslot allocation bitmap is assigned to the TBF; if the first timeslot allocation bitmap is invalid and the second timeslot bitmap is valid, the carrier corresponding to the second timeslot allocation bitmap is assigned to the TBF. Therefore, in the second type of uplink assignment message, either one carrier or two carriers may be assigned to a TBF.

The following is an example of some codes included in the second type of uplink assignment message:

```
  < Dual Carrier Multiple Uplink TBF Assignment struct > ::=
      {1
          {0 | 1 < TIMESLOT_ALLOCATION_CI : bit (8) > }
          { 0 | 1 < TIMESLOT_ALLOCATION_C2 : bit (8) > }
         { 1 < Uplink TBF assignment: < Dual Carrier Uplink TBF assignment struct > > }
         ** 0
  } ** 0
```

If there are other TBFs before the TBF corresponding to a packet resource request is established, the carrier configuration of the original TBF need be modified. For example, before the TBF corresponding to the packet resource request is established, if uplink data is transmitted between the BSS and the MS via TBF1 and Carrier-A is assigned to TBF1 and Carrier-B and Carrier-C are assigned to the new TBF2, the Carrier-A assigned to TBF1 needs to be changed into Carrier-B or Carrier-C because only two carriers are allowed between the MS and the BSS. Therefore, in the assignment message, Carrier-B and Carrier-C need be assigned to TBF2 and Carrier-B or Carrier-C need be assigned to TBF 1.

Step 304: The BSS sends the uplink assignment message to the MS.

Step 305: Upon receiving the uplink assignment message, the MS acquires the carriers assigned to TBFs and sends the uplink data to the BSS on the corresponding TBFs.

The method and system for assigning carriers to an MS may be applied in the scenarios in which the system directs an MS to assign radio resources by sending one of the following messages: Packet Downlink Assignment, Multiple TBF Downlink Assignment, Packet Uplink Ack/Nack, Packet Uplink Assignment, Multiple TBF Uplink Assignment, Packet Timeslot Reconfigured, Multiple TBF Timeslot Reconfigured, PS Handover Command, DTM Handover Command, Packet Assignment, Immediate Assignment, Immediate Assignment Extended and DTM Assignment Command.

The method for assigning carriers to an MS provided in another embodiment of the present invention can effectively increase the carrier assignment efficiency and further improve the peak rate and the average rate of the system.

In addition, the method and system provided in an embodiment of the present invention can also assign one carrier and/or more carriers to an MS. Both the MS and the BS included in the system for assigning carriers to an MS support two or more carriers.

The following describes the construction process of an assignment message in the method for assigning carriers to an MS when one and/or more carriers are assigned to an MS.

The format of the downlink assignment message constructed in the first mode includes the information of multiple assigned carriers, the structure of the downlink TBF that is assigned multiple carriers and the structure of the downlink TBF that is assigned part of carriers. Based on the carriers assigned to the TBFs, the information of the TBFs is filled in the structure of the downlink TBF that is assigned multiple carriers and the structure of the downlink TBF that is assigned part of carriers. If the information of a TBF is filled in the structure of the downlink TBF that is assigned multiple carriers, multiple carriers are assigned to the TBF, as indicated by the assignment message; if the information of a TBF is filled in the structure of the downlink TBF that is assigned part of the carriers, the corresponding part of carriers are assigned to the TBF. Some carriers use a bitmap to indicate which carriers are used. If the information of a position in the bitmap is valid, the corresponding carrier is assigned. The scenario in which part of carriers are assigned also includes the scenario in which only one carrier is assigned. For example, a BS assigns three TBFs to an MS, and three carriers are used to transmit data; all the three carriers are assigned to the first TBF, the first and the second carriers are assigned to the second TBF, and the first and the third carriers are assigned to the third TBF. In this case, the information of the first TBF is filled in the structure of the downlink TBF that is assigned multiple carriers, the information of the second TBF is filled in the structure of the downlink TBF that is assigned the corresponding part of carriers carrying the bitmaps of the first and second carriers, and the information of the third TBF is filled in the structure of the downlink TBF that is assigned the corresponding part of carriers carrying the bitmaps of the first and third carriers. Therefore, the assignment message includes the information of the TBF that is assigned multiple carriers and information of the TBF that is assigned part of carriers.

The following is an example of some codes included in the first type of downlink assignment message:

```
  < Multiple TBF Multi Carrier Downlink Assignment message content > ::=
  { 1 < Carrier Information : <Carrier Information struct>> } ** 0
  { 0 | { 1 < Multi Carrier Multiple Downlink TBF Assignment : < Multi Carrier Multiple
  Downlink TBF Assignment struct > > } ** 0 }
  { 0| { 1 < Part Carrier Multiple Downlink TBF Assignment : < Part Carrier Bitmap> <
  Multi Carrier Multiple Downlink TBF Assignment struct > > } ** 0 }
```

The downlink assignment message constructed in the second mode shares the same principle as that in the method for assigning carriers to an MS in the two embodiments of the present invention.

With the method, mobile station and base station for assigning carriers to an MS provided in an embodiment of the present invention, an assignment message may be used to assign one carrier and/or multiple carriers to one or more than one TBF between an MS and a BS, which increases the carrier assignment efficiency and further improves the peak rate and the average rate of the system.

## Claims

1. A mobile station (10) comprising:
a receiving unit (11), configured to receive an assignment message and downlink data sent from a base station (20), wherein the assignment message is for assigning part or all of two carriers to at least one Temporary Block Flow, TBF, and there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF;
a message resolving unit (12), configured to resolve the assignment message to obtain one carrier or two carriers assigned to the each of the at least one TBF; and
a sending unit (13), configured to send data to the base station on the one carrier or two carriers assigned to the each of the at least one TBF.

2. The mobile station (10) of claim 1, wherein the assignment message is a downlink assignment message or an uplink assignment message, and both the mobile station (10) and the base station (20) support two carriers.

3. The mobile station (10) of claim 2, wherein if the assignment message is an uplink assignment message, before the receiving unit receiving the assignment message, the mobile station (10) is further configured to send a request for packet resources containing a packet flow identifier to the base station (20).

4. A base station (20) comprising:
a receiving unit (21), configured to receive data transmitted between the base station (20) and a mobile station (10);
a resource management unit (22), configured to assign one carrier or two carriers to the each of at least one TBF;
a message constructing unit (23), configured to construct an assignment message indicating carrier assignment of each of the at least one Temporary Block Flow, TBF, according to the one carrier or two carriers assigned to the each of the at least one TBF, wherein there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF; and
a sending unit (24), configured to send the assignment message and other downlink data to the mobile station (10).

5. The base station (20) of claim 4, wherein the assignment message is a downlink assignment message or an uplink assignment message, and both the mobile station (10) and the base station (20) support two carriers.

6. The base station (20) of claim 5 ,wherein if the assignment message is a downlink assignment message, before the resource management unit (22) assigning the one carrier or two carriers to the each of at least one TBF, the base station (20) is further configured to receive a downlink frame containing a packet flow identifier from a serving general packet radio service support node.

7. A method for assigning carriers to a mobile station (10), comprising:
receiving, by the mobile station (10), an assignment message and downlink data sent from a base station (20), wherein the assignment message is for assigning part or all of two carriers to at least one Temporary Block Flow, TBF, and there are a first timeslot allocation bitmap and a second timeslot allocation bitmap included in the assignment message, if the first timeslot allocation bitmap is set to invalid and the second timeslot allocation bitmap is set to valid, the carrier corresponding to the second timeslot allocation bitmap is assigned to one of the at least one TBF, if the first timeslot allocation bitmap is set to valid and the second timeslot allocation bitmap is set to invalid, the carrier corresponding to the first timeslot allocation bitmap is assigned to one of the at least one TBF, and if both the first timeslot allocation bitmap and the second timeslot allocation bitmap are set to valid, the two carriers are assigned to one of the at least one TBF;
resolving, by the mobile station (10), the assignment message to obtain one carrier or two carriers assigned to the each of the at least one TBF; and
sending, by the mobile station (10), data to the base station (20) on the one carrier or two carriers assigned to the each of the at least one TBF.

8. The method of claim 7, wherein the the assignment message is a downlink assignment message or an uplink assignment message, and both the mobile station (10) and the base station (20) support two carriers.

9. The method of claim 8, wherein if the assignment message is an uplink assignment message, futher comprising:
before receiving the assignment message, sending, by the mobile station (10), a request for packet resources containting a packet flow identifier to the base station (20).

## Patentansprüche

1. Mobilfunkstation (10), umfassend:
eine Empfangseinheit (11), die konfiguriert ist, eine Zuweisungsnachricht und
Abwärtsübertragungsdaten zu empfangen, die von einer Basisstation (20) gesendet wurden, wobei die Zuweisungsnachricht dazu dient, einen Teil oder alle von zwei Trägersignalen an mindestens eine befristete Übertragung von Paketdaten, TBF ("Temporary Block Flow"), zuzuweisen, und wobei zu der Zuweisungsnachricht eine erste Bitmap einer Zeitschlitzzuteilung und eine zweite Bitmap einer Zeitschlitzzuteilung gehören; wobei, wenn die erste Bitmap einer Zeitschlitzzuteilung auf ungültig gestellt ist und die zweite Bitmap einer Zeitschlitzzuteilung auf gültig gestellt ist, das Trägersignal, das der zweiten Bitmap einer Zeitschlitzzuteilung entspricht, an eine der mindestens einen TBF zugewiesen wird, wobei, wenn die erste Bitmap einer Zeitschlitzzuteilung auf gültig gestellt ist und die zweite Bitmap einer Zeitschlitzzuteilung auf ungültig gestellt ist, das Trägersignal, das der ersten Bitmap einer Zeitschlitzzuteilung entspricht, an eine der mindestens einen TBF zugewiesen wird; und wobei, wenn sowohl die erste Bitmap einer Zeitschlitzzuteilung als auch die zweite Bitmap einer Zeitschlitzzuteilung auf gültig gestellt sind, beide Trägersignale an eine der mindestens einen TBF zugewiesen werden;
eine Nachrichtenbearbeitungseinheit (12), die konfiguriert ist, die Zuweisungsnachricht zu bearbeiten, um ein Trägersignal oder zwei Trägersignale zu erhalten, die jeder der mindestens einen TBF zugewiesen sind; und
eine Sendeeinheit (13), die konfiguriert ist, auf dem einen Trägersignal oder auf den zwei Trägersignalen, die jeder der mindestens einen TBF zugewiesen sind, Daten an die Basisstation zu senden.

2. Mobilfunkstation (10) nach Anspruch 1, wobei die Zuweisungsnachricht eine Zuweisungsnachricht für eine Abwärtsübertragung oder eine Zuweisungsnachricht für eine Aufwärtsübertragung ist, und wobei sowohl die Mobilfunkstation (10) als auch die Basisstation (20) zwei Trägersignale unterstützen.

3. Mobilfunkstation (10) nach Anspruch 2, wobei, wenn die Zuweisungsnachricht eine Zuweisungsnachricht für eine Aufwärtsübertragung ist, die Mobilfunkstation (10) außerdem konfiguriert ist, eine Anfrage für Paketressourcen, die eine Paketübertragungskennung enthalten, an die Basisstation (20) zu senden, bevor die Empfangseinheit die Zuweisungsnachricht empfängt.

4. Basisstation (20), umfassend:
eine Empfangseinheit (21), die konfiguriert ist, Daten zu empfangen, die zwischen der Basisstation (20) und einer Mobilfunkstation (10) übertragen werden;
eine Ressourcenverwaltungseinheit (22), die konfiguriert ist, jeder der mindestens einen TBF ein Trägersignal oder zwei Trägersignale zuzuweisen;
eine Nachrichtenerstellungseinheit (23), die konfiguriert ist, eine Zuweisungsnachricht zu erstellen, die eine Trägersignalzuweisung zu jeder der mindestens einen befristeten Übertragung von Paketdaten, TBF, anzeigt, gemäß dem einen Trägersignal oder den zwei Trägersignalen, die jeder der mindestens einen TBF zugewiesen wurden, wobei zu der Zuweisungsnachricht eine erste Bitmap einer Zeitschlitzzuteilung und eine zweite Bitmap einer Zeitschlitzzuteilung gehören;
wobei, wenn die erste Bitmap einer Zeitschlitzzuteilung auf ungültig gestellt ist und
die zweite Bitmap einer Zeitschlitzzuteilung auf gültig gestellt ist, das Trägersignal,
das der zweiten Bitmap einer Zeitschlitzzuteilung entspricht, an eine der mindestens einen TBF zugewiesen wird, wobei, wenn die erste Bitmap einer Zeitschlitzzuteilung auf gültig gestellt ist und die zweite Bitmap einer Zeitschlitzzuteilung auf ungültig gestellt ist, das Trägersignal, das der ersten Bitmap einer Zeitschlitzzuteilung entspricht, an eine der mindestens einen TBF zugewiesen wird; und wobei, wenn sowohl die erste Bitmap einer Zeitschlitzzuteilung als auch die zweite Bitmap einer Zeitschlitzzuteilung auf gültig gestellt sind, beide Trägersignale an eine der mindestens einen TBF zugewiesen werden; und
eine Sendeeinheit (24), die konfiguriert ist, die Zuweisungsnachricht und andere Abwärtsübertragungsdaten an die Mobilfunkstation (10) zu senden.

5. Basisstation (20) nach Anspruch 4, wobei die Zuweisungsnachricht eine Zuweisungsnachricht für eine Abwärtsübertragung oder eine Zuweisungsnachricht für eine Aufwärtsübertragung ist, und sowohl die Mobilfunkstation (10) als auch die Basisstation (20) zwei Trägersignale unterstützen.

6. Basisstation (20) nach Anspruch 5, wobei, wenn die Zuweisungsnachricht eine Zuweisungsnachricht für eine Abwärtsübertragung ist, die Basisstation (20) außerdem konfiguriert ist, einen Abwärtsübertragungdatenblock, der eine Paketübertragungskennung enthält, von einem "Serving General Packet Radio Service Support Node" zu empfangen, bevor die Ressourcenverwaltungseinheit (22) das eine Trägersignal oder die zwei Trägersignale an jede der mindestens einen TBF zuweist.

7. Verfahren für das Zuweisen von Trägersignalen zu einer Mobilfunkstation (10), umfassend:
Empfangen einer Zuweisungsnachricht und von Abwärtsübertragungsdaten von der Mobilfunkstation (10), die von einer Basisstation (20) gesendet wurden, wobei die Zuweisungsnachricht dazu dient, einen Teil oder alle von zwei Trägersignalen an mindestens eine befristete Übertragung von Paketdaten ("Temporary Block Flow",
TBF) zuzuweisen, und wobei zu der Zuweisungsnachricht eine erste Bitmap einer Zeitschlitzzuteilung und eine zweite Bitmap einer Zeitschlitzzuteilung gehören;
wobei, wenn die erste Bitmap einer Zeitschlitzzuteilung auf ungültig gestellt ist und
die zweite Bitmap einer Zeitschlitzzuteilung auf gültig gestellt ist, das Trägersignal,
das der zweiten Bitmap einer Zeitschlitzzuteilung entspricht, an eine der mindestens einen TBF zugewiesen wird, wobei, wenn die erste Bitmap einer Zeitschlitzzuteilung auf gültig gestellt ist und die zweite Bitmap einer Zeitschlitzzuteilung auf ungültig gestellt ist, das Trägersignal, das der ersten Bitmap einer Zeitschlitzzuteilung entspricht, an eine der mindestens einen TBF zugewiesen wird; und wobei, wenn sowohl die erste Bitmap einer Zeitschlitzzuteilung als auch die zweite Bitmap einer Zeitschlitzzuteilung auf gültig gestellt sind, beide Trägersignale an eine der mindestens einen TBF zugewiesen werden;
Bearbeiten der Zuweisungsnachricht durch die Mobilfunkstation (10), um ein Trägersignal oder zwei Trägersignale zu erhalten, die jeder der mindestens einen TBF zugewiesen sind; und
Senden von Daten von der Mobilfunkstation (10) an die Basisstation (20) auf dem einen Trägersignal oder auf den zwei Trägersignalen, die jeder der mindestens einen TBF zugewiesen sind.

8. Verfahren nach Anspruch 7, wobei die Zuweisungsnachricht eine Zuweisungsnachricht für eine Abwärtsübertragung oder eine Zuweisungsnachricht für eine Aufwärtsübertragung ist, und wobei sowohl die Mobilfunkstation (10) als auch die Basisstation (20) zwei Trägersignale unterstützen.

9. Verfahren nach Anspruch 8, wobei die Zuweisungsnachricht eine Zuweisungsnachricht für eine Aufwärtsübertragung ist und das Verfahren außerdem umfasst:
Senden einer Anfrage für Paketressourcen, die eine Paketübertragungskennung enthalten, von der Mobilfunkstation (10) an die Basisstation (20), bevor die Zuweisungsnachricht empfangen wird.

## Revendications

1. Station mobile (10), comprenant :
une unité de réception (11), configurée pour recevoir un message d'affectation et des données descendantes envoyés par une station de base (20), dans laquelle le message d'affectation est destiné à affecter tout ou partie de deux porteuses à au moins un Flux de Blocs Temporaire, TBF (Temporary Block Flow), et un premier topogramme binaire d'allocation de créneau temporel et un second topogramme binaire d'allocation de créneau temporel sont inclus dans le message d'affectation, si le premier topogramme binaire d'allocation de créneau temporel est réglé à invalide et
si le second topogramme binaire d'allocation de créneau temporel est réglé à valide,
la porteuse correspondant au second topogramme binaire d'allocation de créneau temporel est affectée à l'un de l'au moins un TBF, si le premier topogramme binaire d'allocation de créneau temporel est réglé à valide et si le second topogramme binaire d'allocation de créneau temporel est réglé à invalide, la porteuse correspondant au premier topogramme binaire d'allocation de crénau temporel est affectée à l'un de l'au moins un TBF, et si le premier topogramme binaire d'allocation de créneau temporel et le second topogramme binaire d'allocation de créneau temporel sont tous deux réglés à valide, les deux porteuses sont affectées à l'un de l'au moins un TBF ;
une unité de résolution de message (12), configurée pour résoudre le message d'affectation afin d'obtenir une porteuse ou deux porteuses affectée(s) à chacun de l'au moins un TBF ; et
une unité d'envoi (13), configurée pour envoyer des données à la station de base sur la porteuse ou sur les deux porteuses affectée(s) à chacun de l'au moins un TBF.

2. Station mobile (10) selon la revendication 1, dans laquelle le message d'affectation est un message d'affectation de liaison descendante ou un message d'affectation de liaison montante, et la station mobile (10) et la station de base (20) prennent toutes deux en charge deux porteuses.

3. Station mobile (10) selon la revendication 2, dans laquelle, si le message d'affectation est un message d'affectation de liaison montante, avant que l'unité de réception ne reçoive le message d'affectation, la station mobile (10) est en outre configurée pour envoyer une demande de ressources de paquets contenant un identifiant de flux de paquets à la station de base (20).

4. Station de base (20), comprenant :
une unité de réception (21), configurée pour recevoir des données transmises entre la station de base (20) et une station mobile (10) ;
une unité de gestion de ressources (22), configurée pour affecter une porteuse ou
deux porteuses à chacun de l'au moins un TBF ;
une unité de construction de message (23), configurée pour construire un message d'affectation indiquant une affectation de porteuse de chacun du ou des Flux de Blocs Temporaire, TBF (Temporary Block Flow), conformément à la porteuse ou aux deux porteuses affectée(s) à chacun de l'au moins un TBF, dans laquelle un premier topogramme binaire d'allocation de créneau temporel et un second topogramme binaire d'allocation de créneau temporel sont inclus dans le message d'affectation, si le premier topogramme binaire d'allocation de créneau temporel est réglé à invalide et si le second topogramme binaire d'allocation de créneau temporel est réglé à valide, la porteuse correspondant au second topogramme binaire d'allocation de créneau temporel est affectée à l'un de l'au moins un TBF, si le premier topogramme binaire d'allocation de créneau temporel est réglé à valide et si le second topogramme binaire d'allocation de créneau temporel est réglé à invalide, la porteuse correspondant au premier topogramme binaire d'allocation de créneau temporel est affectée à l'un de l'au moins un TBF, et si le premier topogramme binaire d'allocation de créneau temporel et le second topogramme binaire d'allocation de créneau temporel sont tous deux réglés à valide, les deux porteuses sont affectées à l'un de l'au moins un TBF ; et
une unité d'envoi (24), configurée pour envoyer le message d'affectation et d'autres données de liaison descendante à la station mobile (10).

5. Station de base (20) selon la revendication 4, dans laquelle le message d'affectation est un message d'affectation de liaison descendante ou un message d'affectation de liaison montante, et la station mobile (10) et la station de base (20) prennent toutes deux en charge deux porteuses.

6. Station de base (20) selon la revendication 5, dans laquelle, si le message d'affectation est un message d'affectation de liaison descendante, avant que l'unité de gestion de ressources (22) n'affecte la porteuse ou les deux porteuses à chacun de l'au moins un TBF, la station de base (20) est en outre configurée pour recevoir une trame de liaison descendante contenant un identifiant de flux de paquets en provenance d'un noeud de support de service général de radiocommunication par paquets.

7. Procédé d'affectation de porteuses à une station mobile (10), comprenant :
la réception, par la station mobile (10), d'un message d'affectation et de données de liaison descendante envoyés par une station de base (20), dans lequel le message d'affectation est destiné à affecter tout ou partie de deux porteuses à au moins un Flux de Blocs Temporaire, TBF (Temporary Block Flow), et un premier topogramme binaire d'allocation de créneau temporel et un second topogramme binaire d'allocation de créneau temporel sont inclus dans le message d'affectation, si le premier topogramme binaire d'allocation de créneau temporel est réglé à invalide et
si le second topogramme binaire d'allocation de créneau temporel est réglé à valide,
la porteuse correspondant au second topogramme binaire d'allocation de créneau temporel est affectée à l'un de l'au moins un TBF, si le premier topogramme binaire d'allocation de créneau temporel est réglé à valide et si le second topogramme binaire d'allocation de créneau temporel est réglé à invalide, la porteuse correspondant au premier topogramme binaire d'allocation de créneau temporel est affectée à l'un de l'au moins un TBF, et si le premier topogramme binaire d'allocation de créneau temporel et le second topogramme binaire d'allocation de créneau temporel sont tous deux réglés à valide, les deux porteuses sont affectées à l'un de l'au moins un TBF ;
la résolution, par la station mobile (10), du message d'affectation afin d'obtenir une porteuse ou deux porteuses affectée(s) à chacun de l'au moins un TBF ; et
l'envoi, par la station mobile (10), de données à la station de base (20) sur la porteuse ou les deux porteuses affectée(s) à chacun de l'au moins un TBF.

8. Procédé selon la revendication 7, dans lequel le message d'affectation est un message d'affectation de liaison descendante ou un message d'affectation de liaison montante, et la station mobile (10) et la station de base (20) prennent toutes deux en charge deux porteuses.

9. Procédé selon la revendication 8, dans lequel, si le message d'affectation est un message d'affectation de liaison montante, le procédé comprend en outre :
avant la réception du message d'affectation, l'envoi, par la station mobile (10), d'une demande de ressources de paquets contenant un identifiant de flux de paquets à la station de base (20).
